# EUROPEAN PATENT APPLICATION

(11) **EP 4 726 560 A1**
(43) Date of publication of application: **15.04.2026**
(21) Application number: 25207039.6
(22) Date of filing: 06.10.2025
(51) Int. Cl.: G06F 13/12, G06F 13/38, G06F 13/40, G06F 13/42, H05K 7/14, H04L 41/022, H04L 41/052, G06F 1/185

(54) **ADAPTING OPEN COMPUTE PROJECT TO SUPPORT SENSOR I/O STANDARDS**

(30) Priority: 13.10.2024 US 202463706687 P; 01.10.2025 US 202519347417
(71) Applicant: One Stop Systems, Inc., Escondido CA 92029 (US)
(72) Inventor: REARDON, James Micheal, Escondido, CA 92029 (US); ISON, James John JR, Escondido, CA 92029 (US)
(74) Representative: Pietra, Giulia

(57) **Abstract**

A switched fabric backplane (SFB) system (200) is provided to enable interoperability between Open Compute Project (OCP) hardware and legacy I/O devices compliant with standards such as VPX, SOSA, PXI, or ATCA (206a-206d). The system (200) includes a versatile backplane (206) supporting both OCP-compliant connections and legacy slots. An independent management agent (201), containing a dedicated processor and software, governs a PCI Express (PCIe) switch (202) and an Ethernet switch (207). The PCIe switch (202) connects to central (203) and graphics processing unit (CPU/GPU) (204) assemblies. Through inter-fabric communication (218), the management agent (201) monitors and configures the switches (202, 207), allowing OCP and legacy devices to operate together seamlessly. This integration is achieved while preserving the core architectural characteristics of the legacy I/O standards. The system (200) also includes a Non-Volatile Memory Express (NVMe) storage drive, a power supply module (219), and multiple transceivers (211, 212, 213).

## Description

### BACKGROUND

Open Compute Project (OCP) defines computer product formats suitable for use in data centers. The OCP group does not define sensors or other forms of I/O typically found in edge computing (e.g., vehicles of all kinds).

Traditionally, an I/O device (e.g., VPX format) is connected to a legacy VPX backplane that limits communication speed between I/O and computing resources. There is a need to extend the performance of legacy systems that rely on such standards.

The modern computing landscape presents a significant challenge in bridging high-performance data center technologies with specialized edge computing requirements. Data centers have benefited from the standardization and cost optimization provided by the Open Compute Project, which has driven down costs while increasing performance through economies of scale and standardized form factors. However, these benefits have been largely unavailable to applications requiring real-time sensor processing, such as autonomous vehicles, industrial automation, defense systems, and telecommunications infrastructure.

Legacy I/O standards such as VPX (VITA 46), OpenVPX (VITA 65), PXI (PCI eXtensions for Instrumentation), XMC, ATCA, FMC, CompactPCI Express, VMEbus, and related technologies were developed to address the ruggedized, real-time requirements of embedded and edge applications. These standards provide robust mechanical and electrical specifications suitable for harsh environments, deterministic timing characteristics, and well-established software ecosystems. However, they suffer from several significant limitations that have become increasingly problematic as data processing demands have grown.

The primary technical limitation of legacy I/O systems is their reliance on parallel bus architectures and shared backplane resources that create inherent bandwidth bottlenecks. For example, traditional VPX backplanes typically provide data rates of 160 MB/s to 1.6 GB/s per slot, which is insufficient for modern high-bandwidth sensor applications such as high-resolution video processing, Lidar point cloud analysis, or software-defined radio applications that may require sustained data rates of tens or hundreds of gigabytes per second.

Additionally, legacy systems suffer from scalability limitations due to electrical loading effects, signal integrity constraints, connector size constraints, and the shared nature of backplane resources. As more devices are added to a legacy backplane, the available bandwidth per device decreases, latency is introduced, and system timing becomes less deterministic. This creates a fundamental conflict between the need for more processing power and the physical limitations of the interconnect architecture.

The cost structure of legacy I/O systems also presents challenges for widespread deployment. Because these systems serve specialized markets with lower volumes than data center equipment, the per-unit costs are significantly higher than equivalent OCP hardware. For example, a specialized VPX processing card may cost 5-10 times more than a functionally equivalent OCP server module, despite offering lower raw performance.

Current attempts to address these limitations have focused on incremental improvements within existing standards, such as higher-speed serial protocols within VPX (e.g., 10 Gigabit Ethernet, 100 Gigabit Ethernet, PCI Express Gen3/Gen4), but these approaches are constrained by the fundamental architectural limitations of the legacy backplane designs and do not address the cost disadvantages.

There exists a significant unmet need for a solution that can leverage the cost and performance advantages of OCP hardware while maintaining compatibility with existing legacy I/O ecosystems, preserving investment in software and specialized I/O hardware, and meeting the environmental and timing requirements of edge computing applications.

### SUMMARY

The present disclosure includes a method for extending the function of system modules based on the Open Compute Project (OCP) standard by the novel introduction of switched fabrics to support standard sensor input and output interfaces. OCP is focused on computer cost and performance optimization for large-scale data centers through standardization. Switched fabrics extend OCP to support existing or new interfaces that provide low latency and high throughput for input and output (I/O) of time-sensitive data. Fast, inexpensive, and widely available OCP computing modules are combined with traditional I/O modules based on the listed standards. Introducing OCP breaks the speed bottleneck inherent in the original standard, lowers cost, enhances the switched fabric, broadens the system management, introduces functional safety, and preserves the architectural features of the original standard.

A Switched Fabric is a network topology used in high-performance computer systems to manage data transmission between components. In this context, "fabric" refers to the complex interconnected system of pathways through which data travels, while "switched" means that the data is routed using switching devices, typically directed to its destination by an address embedded with the data.

The interfaces for I/O are based on industry standards, such as VPX, OpenVPX, XMC, ATCA, uTCA, PXI, PCI Express, VXI, CompactPCI, and VMEbus. A switched fabric technology, such as, but not limited to, PCI Express, Ethernet, CXL, UALink, or InfiniBand may be used. A Management Agent (MA) associates OCP computational elements with the I/O interfaces while preserving the architectural characteristics of the I/O standard. The MA bridges the capabilities of both the OCP elements, typically based on OpenBMC standards, with the I/O elements that rely on legacy or specialty management standards. In addition, an MA may provide functional safety processor capability critical for autonomous or semi-autonomous vehicles. The result is a system with OCP's performance, cost characteristics, versatility, and compatibility with the I/O standards and software.

Central Processing Units (CPUs) and Graphics Processing Units (GPUs), along with I/O devices such as, but not limited to FPGAs, storage drives, analog and digital I/O, are attached to a Switch Fabric Backplane (SFB). The SFB implements the switching, the MA, module interconnects, and power distribution. For example, Modular Server, GPU, and storage modules, as defined by OCP, may be attached, along with VPX or other I/O modules, to a single SFB. The MA may operate in both the OCP and VPX domains of the SFB which have disparate functions and standards. The MA configures the system management and fabric management functions of the SFB to allow the OCP and VPX elements to operate together while preserving VPX architectural characteristics. A similar result is achieved when the SFB supports OCP and PXI for high-performance instrumentation or OCP and ATCA or uTCA for telecommunications.

Depending on application requirements, a single SFB may incorporate multiple independent Switched Fabrics of the same type or multiple Switched Fabrics of different types. For example, in VPX applications, the SFB could support PCI Express and Ethernet switching with one or more MAs.

A significant role of the MA is configuring and monitoring the operation of the switching functions on the SFB. The MA comprises one or more dedicated processors, logic resources, and software that operate independently of any OCP or I/O device. The MA controls and monitors the SFB through power-on, startup, regular operation, operational reconfiguration, regular shutdown, fault response, fault shutdown, and low-power hibernation.

MAs may also provide advanced functions such as automatic or on-demand Built-in-Test (BIT) as well as functional safety processing roles in autonomous environments where integrated circuit fault detection, redundancy, error checking and compliance with safety standards such as, but not limited to, ISO 26262, IEC 61508, IEC 62061 and ISO 13849 are necessary.

The MA may also accept optional software packages to support the management requirements of the specific OCP, switch, power, and I/O interface modules connected to the SFB, telemetry of local SFB status to remote systems, and remote activation and control of the SFB by remote systems or signals. These software packages typically are executed by the MA via Docker containers in a virtualized environment.

OCP devices have the highest performance and are among the lowest-cost products of their type available. Heretofore, these products were only used in data centers. The present disclosure extends their use to low-latency I/O functions such as video acquisition, Lidar acquisition, Radar acquisition, vehicle autonomy, artificial intelligence, data recording, software-defined RF applications, and other uses where real-world systems are being sensed or controlled by a computer system. Significant use cases include, but are not limited to, artificial intelligence applications such as the autonomous or remote operation of vehicles, use of large language models, object recognition, threat detection, signal or electronic intelligence (SIGINT/ELINT), electronic warfare (EW), situational awareness, video processing, sensor fusion, security, telecommunications, factory automation, oil exploration, and medicine. Anywhere that time-sensitive sensor or control functions, such as AI/ML (Artificial Intelligence / Machine Learning) functions that process high-volume data, the methods described herein may be used. Other applications are AI data set capture, AI training, and large-scale AI inferencing in defense, oil and gas, mining, and rugged entertainment applications. To support real-time decision-making, sensors may be located within or around a system (i.e., vehicle, vessel, structure, physical area), commonly called "edge processing". This method facilitates the timely routing of data sensors and I/O data at the edge.

Since OCP is designed for the datacenter, the power input standards are generally designed for the power types available in the datacenter. High voltage power, such as 240 volt (V) single-phase, 50-60 Hertz (Hz), alternating current (AC), or 208V three-phase 50-60 Hz AC, may be standard in a hyperscale datacenter, while 48V direct current (DC) can still be found in telecommunications datacenters, due to the use of battery banks for backup power. When OCP standards are used at the edge with VPX or other edge standards, the power for a hybrid OCP/VPX system may be limited to the vehicle input power such as 115V single-phase 400-800Hz AC, 115V three-phase 400-800Hz AC, 12VDC, or 28VDC, for example. The Common Redundant Power Supply (CRPS) standard that is part of OCP does account for these common vehicle power types and therefore edge hybrid systems based on OCP must operate on non-standard vehicle power supplies or new vehicle power supplies adopted to the CRPS standard must be created.

In a first aspect, a hybrid system for integrating Open Compute Project (OCP) and VPX is provided, comprising an OCP-compliant root complex including at least one Peripheral Component Interconnect (PCI) Express graphics processing unit, a storage drive, a VPX I/O module, a switched fabric backplane, and a management agent; the management agent is configured to monitor, manage, and control the OCP-compliant root complex, the storage drive, and the VPX I/O module.

According to embodiments, the hybrid system further comprises a hardware device utilizing at least one of the following standards: PXI, PXIe, PICMG, uTCA and ATCA.

According to embodiments, the switched fabric backplane comprises a Peripheral Component Interconnect Express (PCI Express) switched fabric and an Ethernet switched fabric.

Optionally, the hybrid system further comprises a dedicated bridge chip configured to translate between the PCI Express switched fabric and the Ethernet switched fabric.

According to embodiments, the system is configured to use multicast to perform low-latency direct memory access transfers from a single source to multiple intelligent end-points.

According to embodiments, the system is configured to use Compute Express Link (CXL) to perform low-latency direct memory access transfers from a single source to multiple intelligent end-points.

According to embodiments, the storage device comprises a Non-Volatile Memory Express storage drive.

In a second aspect, a switched fabric backplane (SFB) system is provided comprising a management agent (MA), a PCI (Peripheral Component Interconnect) Express switch, an Ethernet switch, a switch fabric backplane (SFB), at least one central processing unit assembly and at least one graphics processing unit assembly, a Non-Volatile Memory Express (NVMe) storage drive, a power supply module, and a plurality of transceivers; the MA comprises a dedicated processor, logic resources, and software operating independently of Open Compute Project (OCP) and legacy I/O devices, wherein legacy I/O devices are I/O devices compliant with an interface standard selected from the group consisting of VPX, SOSA, PXI, and ATCA;. the PCI Express switch and Ethernet switch are coupled to the MA; the SFB supports multiple interface standards including VPX/SOSA-compliant slots and OCP-compliant connections; the at least one central processing unit assembly and at least one graphics processing unit assembly are each connected to the PCI Express switch; the PCI Express switch and the Ethernet switch are configured to communicate through inter-fabric communication; the MA is configured to manage, monitor, and configure switching functions that allow OCP and the legacy I/O devices to operate together while preserving the architectural characteristics of legacy I/O standards.

According to embodiments, the switched fabric backplane system further comprises a hardware bridge chip coupled to the PCI Express switch and the Ethernet switch.

According to embodiments, the switched fabric backplane system further comprises cabling between the PCI Express switch and the Ethernet switch.

According to embodiments, the power supply module is configured to convert power from an installation location or vehicle to the switched fabric backplane.

According to embodiments, the power supply module comprises N+1 redundant power supply modules.

According to embodiments, the switched fabric backplane utilizes at least one of PCI Express, Ethernet, UALink, CXL, Infiniband, I2C, and I3C protocol links.

According to embodiments, the plurality of transceivers comprises transceivers selected from Ethernet transceivers, fiberoptic transceivers, and standard transceivers.

According to embodiments, the management agent further comprises a functional safety processor for managing autonomous operations.

According to embodiments, the management agent is configured to execute built-in tests of OCP and VPX/SOSA devices.

According to embodiments, the management agent is configured to throttle the at least one graphics processing unit assembly based on events including at least one of: exceeding thermal limits, exceeding power limits, detection of module failure, and detection of power failure.

According to embodiments, the management agent is configured to securely erase the NVMe storage drives while the switched fabric backplane is operating under only standby power.

According to embodiments, the switched fabric backplane system further comprises a power distribution system, the management agent is configured to control power states including hibernation mode; and the management agent is configured to operate independently of the at least one central processing unit assembly and the at least one graphics processing unit assembly during low-power hibernation.

According to embodiments, the switched fabric backplane system further comprises a housing configured for use in a land, sea, or air vehicle; a VPX-compliant power supply module within the housing; and a VPX-compliant cooling system within the housing.

Optionally, the VPX-compliant power supply module is configured to receive vehicle power and convert the received vehicle power to datacenter-class power.

Optionally, the vehicle power is 28VDC or 115V three-phase 400Hz AC and the datacenter-class power is between 3.3VDC and 54VDC.

Optionally, the VPX-compliant cooling system is selected from the group consisting of: a convection cooling system, a direct-to-chip single-phase liquid cooling system, a direct-to-chip two-phase liquid cooling system, a single-phase immersion cooling system, and a two-phase immersion cooling system.

In a third aspect, a method for integrating a datacenter-class computing architecture with a legacy Input/Output (I/O) architecture is provided, the method comprising providing a switched fabric backplane (SFB) comprising a Peripheral Component Interconnect Express (PCI) Express switch and an Ethernet switch, communicatively coupling an Open Compute Project (OCP)-compliant computing module to the PCI Express switch, communicatively coupling a VPX-compliant I/O module to the SFB, and by a management agent operating independently of the OCP-compliant computing module, configuring a data path through at least one of the PCI Express switch and the Ethernet switch between the OCP-compliant computing module and the VPX-compliant I/O module.

According to embodiments, the method further comprises throttling, by the management agent, at least one graphics processing unit assembly based on events including at least one of: exceeding thermal limits, exceeding power limits, detection of system failure, and detection of power failure.

According to embodiments, the method further comprises performing VPX power supply and conversion and cooling, the VPX power supply and conversion comprises supplying vehicle power to the SFB and converting said vehicle power, by a power supply module, to datacenter-class power, and the cooling is at least one of: convection cooling, direct-to-chip single-phase liquid cooling, direct-to-chip two-phase liquid cooling, single-phase immersion cooling, and two-phase immersion cooling.

According to embodiments, the method further comprises securely erasing, by the management agent, a storage drive while the switched fabric backplane is operating under only standby power.

According to embodiments, the method further comprises controlling, by the management agent, power states including hibernation mode; and, by a management agent, operating independently of at least one central processing unit assembly and at least one graphics processing unit assembly during low-power hibernation.

According to embodiments, the method further comprises using multicast, by the switched fabric backplane, to perform low-latency direct memory access transfers from a single source to multiple intelligent end-points.

### BRIEF DESCRIPTION OF THE DRAWINGS

Figure 1 is a diagram of the system methodology.
Figure 2 schematically shows an example of system functional blocks.
Figure 3 is an example rackmount rugged server with the system methodology.
Figure 4 is an example ground vehicle rugged server with the system methodology.
Figure 5 is an inside of an example ground vehicle rugged server with the system methodology and connector cover removed.
Figure 6 is an example airborne rugged server with the system methodology.
Figure 7 is an inside of an example airborne rugged server with the system methodology and top cover removed.

### DETAILED DESCRIPTION

As used herein, the following terms shall have the following meanings:
Open Compute Project (OCP): Refers to a set of standards and product formats for computer hardware suitable for use in data centers, focused on cost and performance optimization through standardization. An "OCP-compliant" device or module is one that adheres to these formats and standards.
VPX: Refers to a family of standards (e.g., VITA 46, OpenVPX) for ruggedized, real-time embedded computing systems, commonly used in defense, aerospace, and industrial applications. A "VPX-compliant" device or module adheres to the mechanical and electrical specifications of these standards. The term "VPX" is well understood by those of ordinary skill in the art. These standards are promulgated by the VMEbus International Trade Association (VITA) and filed with the American National Standards Institute (ANSI). Relevant standards include, but are not limited to, ANSI/VITA 46.0-2023, which defines the core electrical and mechanical features of the VPX architecture; ANSI/VITA 48.0-2022 (VPX-REDI), which specifies enhanced mechanical and cooling designs; ANSI/VITA 65.0-2025 (OpenVPX), which establishes a system-level framework for creating interoperable systems; and ANSI/VITA 62.0-2022, which specifies requirements for power supply modules. Each of these standards is hereby incorporated by reference in its entirety. As these standards are well-known and publicly available, a detailed explanation of the VPX architecture is not necessary for a complete understanding of the invention and is therefore omitted.
Switched Fabric Backplane (SFB): Refers to a component that implements one or more switched network fabrics (e.g., PCI Express, Ethernet), a management agent, module interconnects, and power distribution, serving as the integration hub for OCP and I/O modules. The SFB may be implemented as a single printed circuit board or as a distributed system of interconnected components and cabling.
Management Agent (MA): Refers to one or more dedicated processors, associated logic resources, and software that operate independently of the primary OCP computing modules and I/O devices. The MA is configured to monitor, manage, and control the SFB and its attached modules, including configuring data paths, managing power states, performing automated system tests, and responding to system events.
Inter-fabric Communication: Refers to the communication between two different types of switched fabrics, such as a PCI Express fabric and an Ethernet fabric. This communication is typically facilitated by a hardware bridge chip or a software-based protocol translation layer that maintains message ordering and timing relationships.
Preserving Architectural Characteristics: Refers to the action of the Management Agent configuring the switched fabric in such a way that a legacy I/O module (e.g., a VPX module) can operate as if it were connected to a native backplane. This includes creating virtual point-to-point connections and managing data flows to meet the timing and protocol expectations of the legacy I/O module.

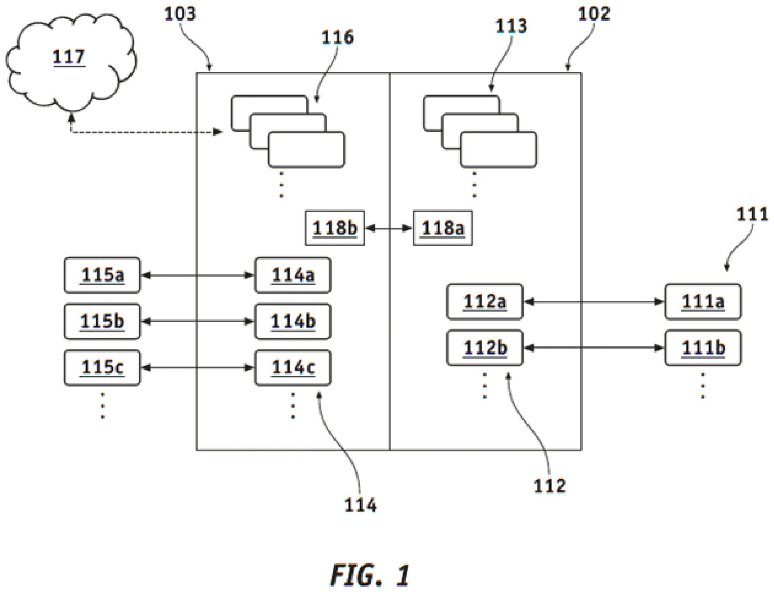

Figure 1 depicts a top-level diagram of the system methodology that integrates switched fabric connections with various interfaces to enable transparent operations, standard sensor interfaces, and standard output interfaces. The Peripheral Component Interconnect Express (PCI Express) Fabric 102 handles time-coherent, low-latency, high-volume data entering or leaving the system. The optional Ethernet Fabric 103 shares many of the features of PCI Express, but at a lower overall performance and cost. The PCI Express Fabric 102 communicates directly with the Ethernet Fabric 103 when necessary to communicate data and control functions inside and outside the system.

The system architecture utilizes the principle of fabric convergence, where multiple high-performance switched fabrics are combined to create a unified data plane that can simultaneously support the deterministic, low-latency requirements of real-time sensor processing and the flexible, high-throughput requirements of general-purpose computing and networking. This convergence is achieved through careful fabric selection, switching topology design, and intelligent management of data flows.

The PCI Express Fabric 102 serves as the primary data plane for sensor ingestion and processing. PCI Express implementations support multiple generations of the standard, including PCI Express Gen3 (8 GT/s per lane), Gen4 (16 GT/s per lane), Gen5 (32 GT/s per lane), Gen6 (64 GT/s per lane), and Gen7 (128 GT/s per lane) with plans for industry extensions to Gen8 (256 GT/s per lane) and beyond. The fabric can be configured with various lane widths (x1, x4, x8, x16, x32) to match the bandwidth requirements of specific sensor interfaces. For example, a high-resolution camera interface might utilize a PCI Express Gen4 x8 connection providing up to 15.75 GB/s of raw bandwidth, while multiple lower-bandwidth sensors can share smaller lane configurations.

The fabric architecture employs non-blocking switch topologies to ensure that sensor data flows do not interfere with each other. This is critical for maintaining the temporal relationships between sensor inputs that are essential for sensor fusion algorithms used in applications such as autonomous navigation, situational awareness, and coordinated control systems. The switch fabric can be implemented using commercial PCI Express switch chips that provide features such as peer-to-peer communication, multicast capabilities, and quality-of-service controls. The programming of multicast functions into the switch chip allows for lower latency communications from sensors to CPUs, GPUs, NVMe drives, Ethernet switches, video devices, and other connected devices. A single data stream into a PCI Express switch is multicast out of the switch to several devices simultaneously, including the Ethernet fabric, thereby eliminating or minimizing delays from data replication, routing, and relay functions from device to device.

The Ethernet Fabric 103 provides complementary functionality focused on control plane operations, telemetry, and communication with external systems. The Ethernet fabric supports multiple speed grades including Fast Ethernet (100 Mbps), Gigabit Ethernet (1 Gbps), 10 Gigabit Ethernet, 25 Gigabit Ethernet, 100 Gigabit Ethernet, 200 Gigabit Ethernet, 400 Gigabit Ethernet, 800 Gigabit Ethernet, 1.6 Terabit Ethernet and higher speeds as required by specific applications. The fabric can be configured with different topologies including star, mesh, and hierarchical arrangements depending on the communication patterns required by the application.

Inter-fabric communication between the PCI Express Fabric 102 and Ethernet Fabric 103 is facilitated through dedicated bridge functions that can translate between the two protocol domains while maintaining message ordering and timing relationships. These bridges can be implemented in hardware using dedicated bridge chips 118a/118b or in software using driver-level translation functions running on the computing elements.

In the field, sensors 111 may be distributed to monitor and detect. Types of sensors include, for example, video sensors, Lidar sensors, and RF sensors. The data captured by these sensors is transmitted into a central PCI Express Fabric 102 through an interface 112. The interface type may vary, depending on the type of sensor 111 and the type of communication protocol of the sensor 111. For example, the interface 112 may be a VPX interface (VPX I/F) 112a, or another standard sensor interface (Sensor I/F) 112b. This interface communicates the sensed data through the PCI Express Fabric 102 and is processed by one or more central processing units or graphics processing units (CPU/GPUs) 113. Once the data is processed by the central PCI Express Fabric 102, it is transmitted to the Ethernet Fabric 103. The Ethernet Fabric 103 is responsible for managing the data, and sending it to the appropriate peripheral devices, such that the data is delivered sequentially or simultaneously, with low and predictable latency ("time-coherency"). Data is sent to the external devices through an interface 114. The interface type may vary, depending on the type of device receiving the data. For example, the interface 114 may be an Ethernet interface (Ethernet I/F) 114a, an aircraft interface (Aircraft I/F) 114b, or another standard interface (standard I/F). These interfaces then route processed data through the Ethernet Fabric to the external devices 115. Examples of external devices include, for example, other sensors 115a, aircraft 115b, or vehicles 115c. These external devices may be standard OCP computers. Within the Ethernet Fabric 103, it is also possible to transmit the processed data to a remote or cloud datacenter 117. This data transmission is performed through one or more communication interfaces 116.

The sensor interface implementations are designed to provide transparent protocol conversion between legacy sensor formats and the high-performance switched fabric architecture. For video sensors, the interface modules can support multiple video standards including HDMI, DisplayPort, Camera Link, CoaXPress, and GigE Vision. High-resolution sensors operating at 4K, 8K, or higher resolutions with frame rates up to 240 fps or higher can be accommodated through the high-bandwidth fabric connections.

Lidar sensor interfaces support both mechanical scanning and solid-state Lidar systems with point cloud generation rates ranging from hundreds of thousands to millions of points per second. The interface modules perform real-time point cloud preprocessing including noise filtering, calibration corrections, and coordinate transformations before forwarding the data to the processing elements.

RF sensor interfaces provide support for software-defined radio applications including spectrum monitoring, signal intelligence, and communications applications. The interfaces can support instantaneous bandwidths from narrowband (kilohertz) to ultra-wideband (gigahertz) applications with real-time digitization and initial signal processing performed at the interface level.

The CPU/GPU processing elements 113 are selected based on the computational requirements of the specific application. For AI/ML inference applications, GPU modules optimized for tensor operations (such as NVIDIA A100, H100, B300, Intel Gaudi 3, or AMD MI350 series and beyond) can provide the parallel processing capability required for real-time neural network execution. For general signal processing applications, high-core-count CPU modules (such as Intel Xeon, NVIDIA Arm-based Grace/Vera or AMD EPYC processors and beyond) provide the flexibility and memory bandwidth required for diverse computational workloads.

The processing architecture supports both homogeneous and heterogeneous computing configurations. In homogeneous configurations, multiple identical processing elements operate on different portions of the sensor data streams, providing scaling through parallelism. In heterogeneous configurations, different processing elements are optimized for different aspects of the computational pipeline, such as initial data conditioning on CPU modules followed by AI inference on GPU modules.

It is critical, and a major benefit of this methodology, that the data received by the sensors 111 is received such that the data may be synchronized across all sensors 111 and such that the data can be transmitted with maximum efficiency (i.e. low, predictable latency). The implementation of the PCI Express Fabric and Ethernet Fabric 103 to connect to the external devices and to receive the data enables this fast and accurate data processing and transfer. While PCI Express may be naturally lower latency than Ethernet, it may be enhanced, as part of this method, with advanced prioritization and efficiency features such as virtual channels, traffic classes, and multicast. In addition, Ethernet may have enhanced latency features enabled as part of this method, including Time-Sensitive Networking (TSN).

Sensor synchronization is achieved through a combination of hardware timestamping, precision timing distribution, and software-based correlation algorithms. Hardware timestamping is implemented at the sensor interface level using high-precision timing references derived from GPS, IEEE 1588 Precision Time Protocol (PTP), or local crystal references with sub-microsecond accuracy.

The fabric architecture supports deterministic latency characteristics through at least one of several mechanisms including: dedicated virtual channels for time-critical data flows, priority-based queuing systems, and traffic shaping algorithms that prevent lower-priority traffic from interfering with sensor data streams. Latency measurements may be continuously monitored and reported to the management system to ensure that timing requirements are maintained across varying system loads.

Data correlation across multiple sensors is performed using temporal alignment algorithms that account for the different processing delays inherent in different sensor types. For example, video sensors may have frame-based timing characteristics while Lidar sensors provide continuous point streams, requiring sophisticated buffering and alignment mechanisms to maintain temporal coherence.

The Ethernet Fabric 103 also provides for general IT communication functions, while the PCI Express Fabric 102 supports low-latency communication of high-volume and continuous data.

The functional separation between the two fabric types is designed to optimize each fabric for its intended use case while providing seamless integration between them. The Ethernet fabric handles management traffic, configuration updates, telemetry reporting, and communication with external systems that do not require the ultra-low latency characteristics of the sensor data paths.

Network protocols supported by the Ethernet fabric include standard TCP/IP for reliable data transfer, UDP (User Datagram Protocol) for low-overhead streaming applications, and specialized protocols such as Data Distribution Service (DDS) for publish-subscribe communication patterns common in distributed sensor systems.

The latency for 1G or 10G Ethernet is about 5-15µsec, while latency through the PCI Express is about 200 nanoseconds. Furthermore, 10G Ethernet provides a volume capacity of 10 gigabits per second (1.25 gigabytes), while PCI Express supports up to 63 gigabytes per second (500 gigabits per second). Due to connector limitations, VPX and SOSA backplane interfaces may be limited to a maximum of 100 gigabits (12.5 gigabytes) per second. Conversely, PCI Express implementations in OCP support 500 gigabits per second (63 gigabytes) or more as part of the standard, with increases planned every 3 years. The figures cited here are theoretical maximums for both fabrics without encoding, routing, or software stack processing, which is more impactful in Ethernet. Practical capacity is limited by any non-determinism present in the data, data encoding, fabric addressing overhead, and routing overhead.

These performance characteristics represent the fundamental capabilities that enable the system to meet the demanding requirements of real-time sensor processing applications. The sub-microsecond latency of the PCI Express fabric is essential for applications such as closed-loop control systems, real-time signal processing, and ultra-low-latency communication systems where timing delays can affect system stability or performance.

The high bandwidth capacity of the PCI Express fabric enables the system to handle multiple concurrent high-data-rate sensor streams without degradation. For example, the system can simultaneously process multiple 4K video streams, high-resolution Lidar point clouds, and wideband RF signals while maintaining real-time performance characteristics.

Practical performance optimization techniques include: payload size optimization to maximize efficiency while minimizing latency, buffer management strategies that balance memory usage with latency requirements, and adaptive flow control mechanisms that respond to varying system loads and processing capabilities.

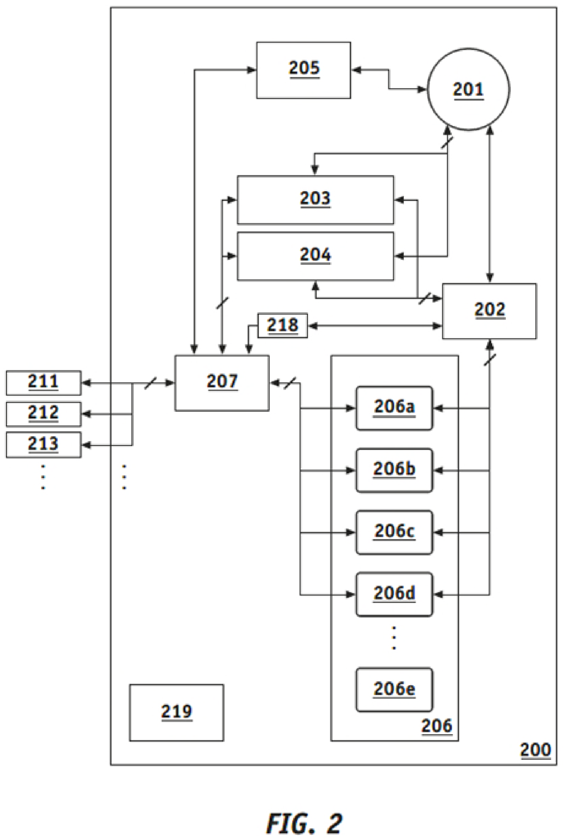

Figure 2 depicts a Switched Fabric Backplane (SFB) 200 for the methodology described herein. The SFB 200 includes a Management Agent (MA) 201, typically a single or redundant dedicated microprocessor running software, which interfaces with and controls at least the PCI Express Switch 202, the CPU assembly 203, the GPU assembly 204, any external controllers 205, and VPX-compliant slots (206A, 206B, 206C, 206D). An external controller 205 may be, for example, an OCP baseboard management controller or functional safety processor. While only one CPU assembly 203 and one GPU assembly 204 are shown in Figure 2, it is possible to have multiple CPU assemblies and multiple GPU assemblies on one SFB. The PCI Express Switch 202 interfaces with the I/O backplane 206, which can have any number of interface standards for I/O, including VPX, OpenVPX, PXI, PCI Express, CXL, NVMe, and OCP. The I/O backplane 206 includes 3U or 6U VPX-compliant slots (206A, 206B, 206C, 206D) compliant to VPX, OpenVPX, or SOSA standards, to support new and existing sensor and processing on the PCI Express fabric, Ethernet fabric, or storage devices, as well as power management devices 206E. The PCI Express Switch 202 may also carry other PCI Express compatible protocols such as Compute Express Link (CXL) or Ultra Accelerator Link (UALink) to the peripheral devices and be equipped with special drivers or firmware to perform advanced functions such as, but not limited to, PCI Express multicast and traffic management via virtual channels. Also included in the SFB 200 is one or more Ethernet Switches 207, which communicate with the CPU assembly 203, the GPU assembly 204 (if so equipped), the I/O backplane 206, the VPX-compliant slots (206A, 206B, 206C, 206D) and the external controller 205. Optionally, the Ethernet switch 207 can also be connected to the PCI Express Switch 202 though hardware bridge chips 218 or directly connected using software driver protocol translation. Through this Ethernet Switch 207, data is also delivered to external devices. This data may be transmitted by the Ethernet Switch 207 at a variety of speeds including, for example, 1, 10, 100, 200, 400, 800, or 1600 Gbps or more, and may be received by Ethernet transceivers 211, fiberoptic transceivers 212, or other standard transceivers 213. A second, typically lower bandwidth 1Gb Ethernet switch, can be optionally added to the architecture to communicate in a sideband manner to the main Ethernet and PCI Express switched fabrics to manage and monitor the VPX-compliant slots, OCP-compliant slots, functional safety processors, and MA. All system elements and modules are powered via a power supply module (PSM) 219 that converts the power available from the installation location or vehicle, to usable power for each element. The PSM 219 may be installed directly on the SFB 200, or it may be separately connected to the SFB 200 (not shown). The PSM 219 may be one or more load sharing units that are independently wired to the SFB 200 or have one or more connectors allowing for direct connection to the SFB 200. All other systems elements, such as switches, MA, CPUs, GPUs and VPX modules may be fed power from the PSM 219 via the SFB 200 and/or though auxiliary connections via cables from the PSM 219 to the modules depending on the type and power requirements of the module.

The MA 201 provides the means to configure the switched fabric (any type) in such a way that the function of VPX or other plug-in modules is not impaired by the presence of the switched fabric. To the modules, the fabric functions as if it is a point-to-point connection. For example, a VPX Ethernet module can be made to appear to be directly connected to a specific OCP CPU module, and this association may be altered by the MA. In a second example, a data acquisition card may be sampling an external analog signal at 6 MHz, converting the samples to a data stream, and feeding the stream to an OCP GPU module for analysis, as directed by the MA. In a third example, a camera may be capturing images of a scene, which are routed by the MA to one or more OCP GPU for inferencing, facial recognition, object recognition, or similar.

The MA serves as a monitoring, management, and control processor, and in some applications, it may also serve as a functional safety processor. It operates independently of the OCP processors and I/O attached to the SFB. The MA is designed to operate continuously, even when conditions do not permit the operation of the overall system. The MA remains alive to support commands and inquiries from the environment surrounding the system, including fault inquiries and orders to hibernate. During hibernation, the MA is the only part of the SFB that remains in operation. With potentially large power requirements of OCP CPUs and GPUs, the MA and PSMs are programmed to work in concert to balance the power requirements of the system elements with the available input power. The MA may accomplish this by accepting remote user commands or by pre-programmed automatic or artificial intelligence (AI) event-based actions. For example, if a system is using all available power from two load-sharing PSMs and one PSM begins to fail, the MA detects the impending failure and either directly throttles the system modules to 50% power usage using out-of-band management paths, such as I²C, or invokes an agent program using in-band PCI Express paths, that allow the system to continue operating. In another example, encrypted data recorded to NVMe drives in a mobile shelter under transport that is operating on minimal standby power from the PSMs needs to be quickly rendered useless when the transport is approached by an enemy. An operator command or button press will signal the MA to trigger a low-power secure erase to clear the private encryption keys of the drives, making the data inaccessible. Other events that may cause the MA to automatically throttle GPUs are thermal limits exceeded, power limits exceeded, module failure detected, or power failure detected.

In one embodiment, multiple SFBs may be connected. This enables many slots or devices (i.e. greater than 15) to be connected to form a larger system. As the number of devices connected within the system grows, signal integrity may become a performance-limiting factor for integrating all devices into a single SFB. Connecting multiple SFBs can enable the communication of many devices and provide additional architectural benefits such as direct memory access (DMA) between devices and traffic isolation of critical or disparate system functions.

A number of embodiments of the disclosure have been described. Nevertheless, it will be understood that various modifications may be made without departing from the scope of the present disclosure. Accordingly, other embodiments are within the scope of the following claims.

The examples set forth above are provided to those of ordinary skill in the art as a complete disclosure and description of how to make and use the embodiments of the disclosure, and are not intended to limit the scope of what the inventor/inventors regard as their disclosure.

Modifications of the above-described modes for carrying out the methods and systems herein disclosed that are obvious to persons of skill in the art are intended to be within the scope of the following claims.

### ALTERNATIVE EMBODIMENTS AND VARIATIONS

In alternative embodiments, the switched fabric architecture can be implemented using different fabric technologies based on specific application requirements. For applications requiring ultra-low latency with moderate bandwidth requirements, InfiniBand fabric can be substituted for or used in conjunction with PCI Express, providing sub-100 nanosecond latencies with bandwidth scaling from 25 Gbps to 1600 Gbps per port.

For applications requiring massive parallel processing capabilities, such as large-scale AI training or high-performance computing workloads, the system can incorporate specialized fabric technologies such as NVIDIA NVLink, AMD Infinity Fabric, OCP UALink, UIO (Unordered Input/Output) or Intel CXL (Compute Express Link) to provide high-bandwidth, cache-coherent connections between processing elements.

The management agent architecture can be implemented using various processing platforms depending on the complexity and security requirements of the application. For basic applications, embedded microcontrollers such as ARM Cortex-M series processors provide sufficient capability for fabric management and system monitoring. For more complex applications requiring advanced management features, higher-performance processors such as ARM Cortex-A series or x86-based embedded processors can be employed.

In security-critical applications, the management agent can incorporate hardware security modules (HSMs), trusted platform modules (TPMs), Secure I/O, post-quantum cryptography (PQC), Integrity & Data Encryption (IDE), and secure boot capabilities to ensure system integrity and prevent unauthorized access or tampering. The management agent can also implement encrypted communication channels and digital signature verification for all configuration and control operations.

For applications requiring fault tolerance and high availability, the system can be configured with redundant fabric paths, redundant management agents, and automatic failover mechanisms. Hot-swappable components can be supported through advanced management agent functionality that can dynamically reconfigure fabric connections and processing assignments without interrupting ongoing operations.

The system architecture can be extended to support software-defined networking (SDN) principles, where the fabric configuration and data routing decisions are controlled by centralized software controllers rather than static hardware configurations. This enables dynamic optimization of system performance based on real-time workload characteristics and changing operational requirements.

### IMPLEMENTATION EXAMPLES

Autonomous Vehicle Implementation: In an autonomous vehicle application, the system processes inputs from multiple cameras (providing 360-degree coverage), Lidar sensors (providing 3D environmental mapping), radar sensors (providing object detection and ranging), and IMU sensors (providing vehicle dynamics information). The PCI Express fabric handles the high-bandwidth sensor data streams (totaling several GB/s), while the Ethernet fabric manages communication with vehicle control systems, navigation systems, and external connectivity for map updates and telemetry reporting.

Industrial Automation Implementation: In a factory automation scenario, the system integrates multiple machine vision cameras for quality inspection, vibration sensors for predictive maintenance, temperature and pressure sensors for process monitoring, and control interfaces for robotic systems. The switched fabric architecture enables real-time coordination between sensing and control functions while providing connectivity to factory-wide information systems.

Defense and Surveillance Implementation: For defense applications, the system can process inputs from multiple RF sensors covering different frequency bands, electro-optical sensors providing visual and infrared imagery, and acoustic sensors for sound detection and localization. The high-performance processing elements perform real-time signal processing, target detection and tracking, and threat assessment while maintaining secure communication with command and control systems.

Telecommunications Infrastructure Implementation: In telecommunications applications, the system can function as a software-defined radio platform processing multiple RF channels simultaneously, performing real-time signal modulation and demodulation, protocol processing, and traffic management. The fabric architecture provides the bandwidth and latency characteristics required for carrier-grade telecommunications equipment while leveraging cost-effective OCP hardware.

### TECHNICAL SPECIFICATIONS AND PERFORMANCE CHARACTERISTICS

Fabric Performance Specifications: The PCI Express fabric implementation supports multiple generations and configurations: PCI Express Gen3 provides 8 GT/s per lane with 8b/10b encoding resulting in 985 MB/s per lane of usable bandwidth; PCI Express Gen4 provides 16 GT/s per lane with 128b/130b encoding resulting in 1.969 GB/s per lane; PCI Express Gen5 provides 32 GT/s per lane with 128b/130b encoding resulting in 3.938 GB/s per lane; PCI Express Gen6 doubles this to 64 GT/s per lane using PAM-4 signaling and Flit-based encoding, resulting in 7.877 GB/s per lane; PCI Express Gen7 further increases to 128 GT/s per lane, also using PAM-4 and Flit encoding, delivering 15.754 GB/s per lane; and PCI Express Gen8 aims to double bandwidth to 256 GT/s per lane, resulting in 31.5 GB/s per lane in future deployments. Lane configurations from x1 to x16 are supported, enabling total fabric bandwidth scaling from single GB/s to several hundreds of GB/s.

Latency Characteristics: End-to-end sensor-to-processor latency through the PCI Express fabric varies based on configuration but typically ranges from 100 nanoseconds for simple point-to-point connections to 2-5 microseconds for complex multi-hop configurations. Ethernet fabric latency ranges from 1-3 microseconds for gigabit connections to 5-15 microseconds for complex routed configurations.

Scalability Parameters: Single switch fabric backplane configurations can support 8-32 sensor/processing modules depending on the specific switch chip implementation and power/cooling constraints. Multi-SFB configurations can scale to hundreds of modules with appropriate inter-SFB connection strategies and distributed management coordination.

Environmental and Reliability Specifications: The system is designed to operate in extended temperature ranges not typically found in datacenters. These temperature ranges can scale from -20°C to +55°C in a manned vehicle or up to -40°C to +85°C, suitable for unmanned edge computing applications. Vibration and shock resistance meet or exceed legacy VPX specifications (MIL-STD-810) ensuring compatibility with existing ruggedized applications. Mean Time Between Failures (MTBF) calculations based on component reliability data indicate system-level MTBF exceeding 50,000 hours under typical operating conditions.

Power Management Specifications: The management agent implements comprehensive power management including per-module power monitoring and control, dynamic voltage and frequency scaling for processing elements, and coordinated power sequencing during startup and shutdown operations. Total system power consumption ranges from 50W for minimal configurations to several kilowatts for high-performance configurations, with power efficiency optimizations providing 2-5x better performance-per-watt compared to equivalent legacy implementations.

### EXAMPLES

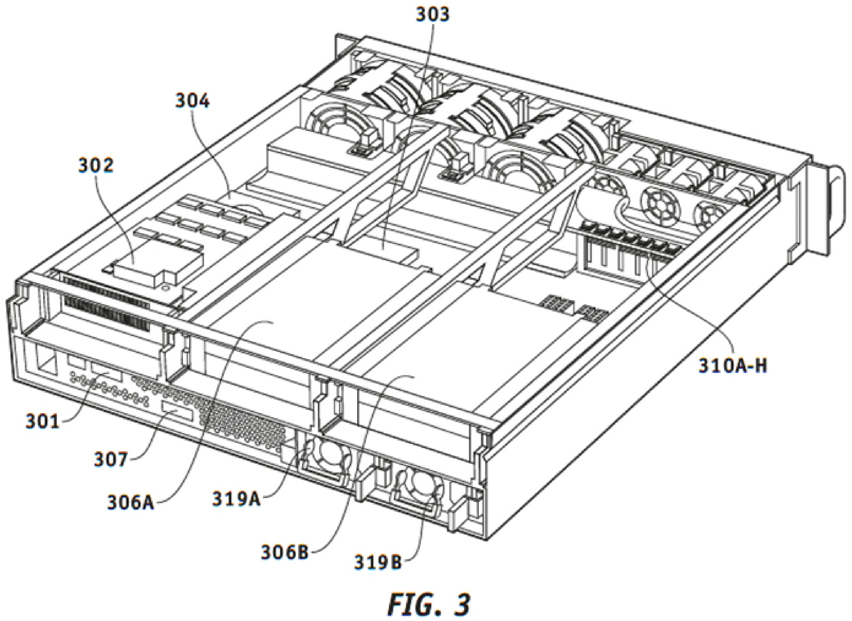

Figures 3 through 7 depict three example configurations of the system methodology. Each configuration shows how an OCP root complex can connect to various SFBs using an MA to integrate GPUs, NVMe drives, and SOSA-compliant VPX sensor electronics.

Figure 3 shows an example rugged 19" rack-mount server combining an OCP motherboard, multi-port PCI Express SFB, multi-port Ethernet interface, NVMe storage devices, and two 3U SOSA-compliant VPX interfaces in an NVIDIA MGX-compliant system. This configuration can be used for laboratory application development and rugged deployments on land, sea and air, where rackmount servers can replace full VPX-style chassis. The main system elements include the OCP compliant CPU assembly 303, which functions as an OCP-compliant root complex, with an OCP 3.0 PCI Express Ethernet interface 307 installed. The CPU assembly 303 is connected to a PCI Express switch card 302 which is in turn connected to a PCI Express GPU 304, up to eight E1.S compliant NVMe drives 310A-310H, and two VPX/SOSA compliant backplanes (not shown) via MCIO PCI Express cables. Each VPX/SOSA backplane contains VPX/SOSA sensor modules 306A-306B. The Ethernet interface 307 is also connected to the VPX/SOSA backplanes via internal cabling and external networks or sensors (not shown) via external Ethernet cabling. The system also includes an MA 301 which is connected to the CPU assembly 303 BMC via Ethernet, the GPU assembly 304, the PCI Express switch 302 and the VPX/SOSA backplane via I²C serial links. All system elements internal to the enclosure may be powered by dual CRPS PSMs 319A-319B that convert available building or vehicle power to the required system module power. In this system example, the SFB is implemented via a series of Ethernet, PCI Express and I²C cables between system elements instead of a single printed circuit board backplane.

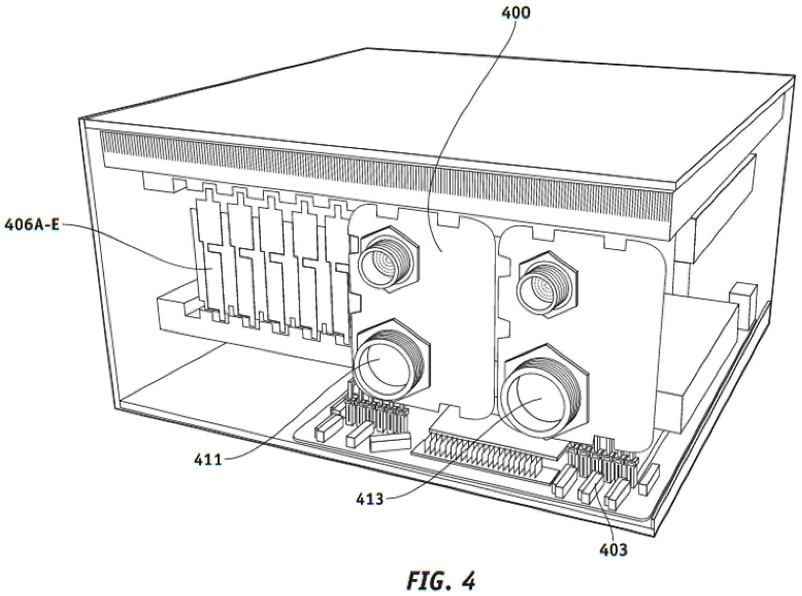

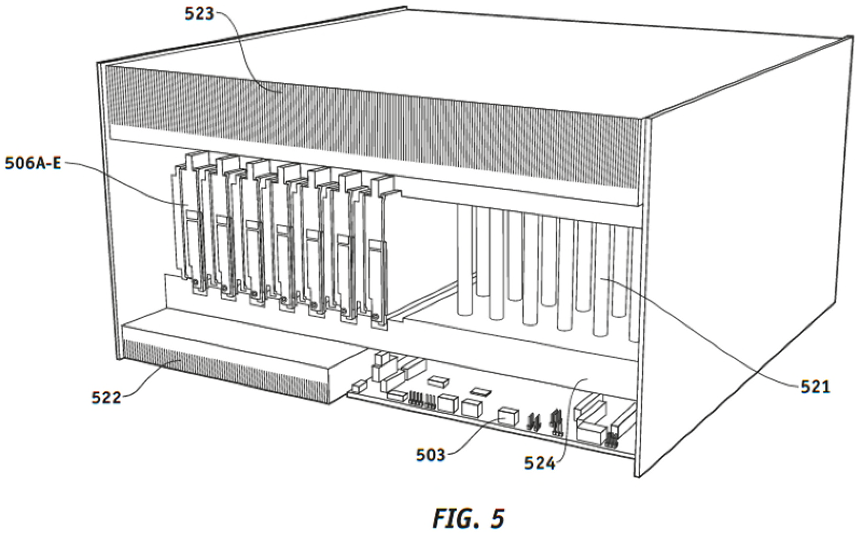

Figures 4 and 5 depict an example rugged server made for ground vehicles. Ground vehicles typically comply with the Command, Control, Communications, Computers, Cyber, Intelligence, Surveillance, Reconnaissance, and Electronic Warfare (C5ISR/EW) Modular Open Suite of Standards (CMOSS). The example rugged server is shown to comply with the Standardized A-kit Vehicle Envelope (SAVE) standard, which is a critical integration standard of CMOSS for military vehicles. The main system elements include the OCP compliant CPU assembly 403, 503 and GPU (not shown) connected to the SFB 400 via PCI Express MCIO cables. The SFB 400 consists of the PCI Express switch (not shown), Ethernet Switch (not shown), PCI Express to Ethernet interconnect (not shown), and MA (not shown) and connects to all other system resources including the VPX/SOSA compliant modules 406A-E, 506A-E sensor I/O connections 411, 413 and power supplies. Typical PSMs (not shown) for this type of CMOSS compliant system may use 28VDC nominal input power from the vehicle and output the module required power of 3.3-54VDC power. Figure 5 highlights a potential cooling solution for the SAVE volume system which consists of heat pipes 521 and conduction cooling fins 522, 523 to assist external fans cooling the high-performance system components to the extended temperature ranges required of vehicle deployments. Note the various uses of advanced cold plate 524, vapor chamber heat pipe 521, and conduction cooling fins 522, 523 to cool datacenter-class components to edge vehicle temperature ranges.

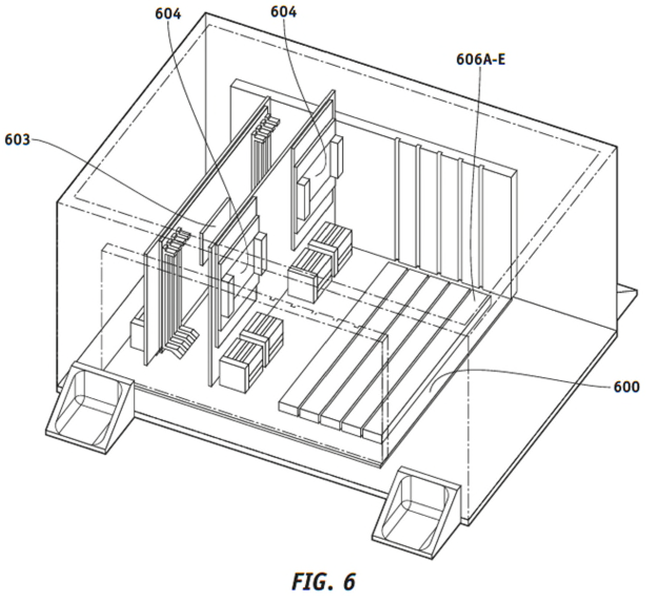

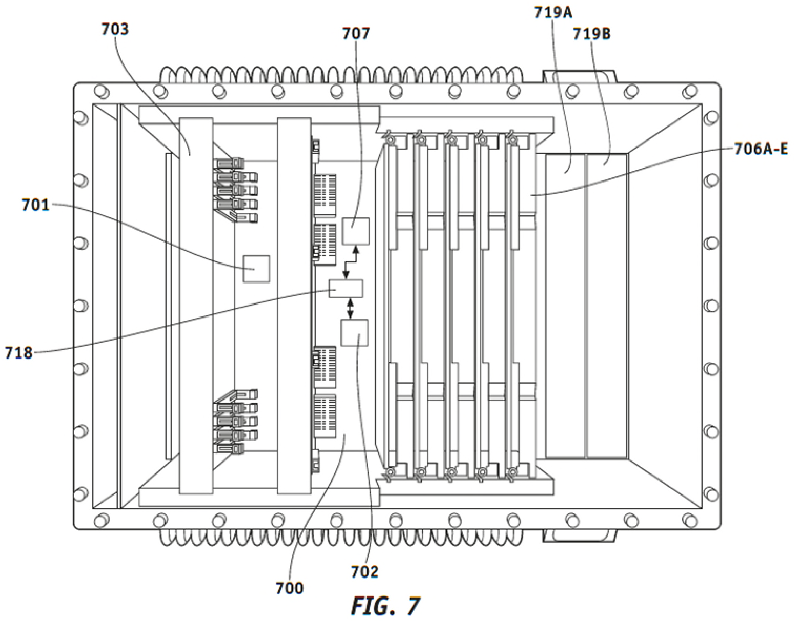

Figures 6 and 7 show an example rugged server made for airborne applications. While some aircraft can accept 19" rackmount electronics, shown in Figure 3, many aircraft, unmanned aerial vehicles (UAVs), and wing pod applications rely on the more rugged Air Transport Rack (ATR) standard. The example ATR rugged server shows an OCP motherboard 603, 703, serving as the OCP-compliant root complex, and dual enterprise GPUs 604 connected to an Ethernet (707) and PCI Express (702) SFB 600, 700, with MA 701, controlling five 6U SOSA-compliant VPX slots 606A-E, 706A-E. The PCI Express and Ethernet fabrics can be connected though hardware bridge chips 718 or directly connected using software driver protocol translation. Connection to the external sensors is accomplished by the sensor bulkhead connections that both ingests high speed sensor data and outputs control and high-speed networking data to other aircraft sensors. Power to the system modules is provided by two load-sharing PSMs 719A/B that convert aircraft power of 115VAC, 400-800Hz single or three phase to the OCP and VPX module required power inputs of 3.3-54VDC. This configuration provides optional 1+1 redundancy allowing for systems to continue to operate in the event one power supply fails. Figure 7 highlights the potential slot configuration of the hybrid airborne server and the cooling configurations possible, especially utilization of liquid cooling.

### METHOD OF OPERATION

In operation, the system provides a novel method for integrating disparate computing standards. The method begins with the MA 201 configuring the PCI Express Switch 202 and the Ethernet Switch 207 upon startup. When a VPX/SOSA module 206A requires communication with an OCP GPU 204, the MA 201 establishes a virtual channel or dedicated data path through the PCI Express switch 202. This configuration ensures that from the perspective of the VPX module 206A, the connection appears as a direct, point-to-point link, thereby preserving its expected architectural behavior. The MA 201 continuously monitors traffic and system health, and may dynamically re-route data paths or throttle component power in response to pre-programmed events or system faults.

## Claims

1. A switched fabric backplane, SFB, system (200) comprising:
a management agent, MA, (201) comprising a dedicated processor, logic resources, and software operating independently of Open Compute Project, OCP, and legacy I/O devices, wherein legacy I/O devices are I/O devices compliant with an interface standard selected from the group consisting of VPX, SOSA, PXI, and ATCA;
a Peripheral Component Interconnect, PCI, Express switch (202) coupled to the management agent (201);
an Ethernet switch (207) coupled to the management agent (201);
a switched fabric backplane supporting multiple interface standards including VPX/SOSA-compliant slots (206A, 206B, 206C, 206D) and OCP-compliant connections;
at least one central processing unit assembly (203) and at least one graphics processing unit assembly (204), each connected to the PCI Express switch (202);
a Non-Volatile Memory Express, NVMe, storage drive;
a power supply module (219); and
a plurality of transceivers (211, 212, 213),
wherein the Peripheral Component Interconnect, PCI, Express switch (202) and the Ethernet switch (207) are configured to communicate through inter-fabric communication, and
wherein the management agent (201) is configured to manage, monitor, and configure switching functions that allow OCP and the legacy I/O devices to operate together while preserving architectural characteristics of legacy I/O standards.

2. The switched fabric backplane system (200) according to claim 1, further comprising a hardware bridge chip coupled to the Peripheral Component Interconnect, PCI, Express switch (202) and the Ethernet switch (207).

3. The switched fabric backplane system (200) according to claim 1 or 2, further comprising cabling between the Peripheral Component Interconnect, PCI, Express switch (202) and the Ethernet switch (207).

4. The switched fabric backplane system (200) according to any of the preceding claims, wherein the power supply module (219) is configured to convert power from an installation location or vehicle to the switched fabric backplane.

5. The switched fabric backplane system (200) according to any of the preceding claims, wherein the power supply module (219) comprises N+1 redundant power supply modules.

6. The switched fabric backplane system (200) according to any of the preceding claims, wherein the switched fabric backplane utilizes at least one of PCI Express, Ethernet, UALink, CXL, Infiniband, I2C, and I3C protocol links.

7. The switched fabric backplane system (200) according to any of the preceding claims, wherein the plurality of transceivers (211, 212, 213) comprises transceivers selected from Ethernet transceivers (211), fiberoptic transceivers (212), and standard transceivers (213).

8. The switched fabric backplane system (200) according to any of the preceding claims, wherein the management agent (201) further comprises a functional safety processor for managing autonomous operations.

9. The switched fabric backplane system (200) according to any of the preceding claims, wherein the management agent (201) is configured to execute built-in tests of OCP and VPX/SOSA devices.

10. The switched fabric backplane system (200) according to any of the preceding claims, wherein the management agent (201) is configured to throttle the at least one graphics processing unit assembly (204) based on events including at least one of: exceeding thermal limits, exceeding power limits, detection of module failure, and detection of power failure.

11. The switched fabric backplane system (200) according to any of the preceding claims, wherein the management agent (201) is configured to securely erase the NVMe storage drives while the switched fabric backplane is operating under only standby power.

12. The switched fabric backplane system (200) according to any of the preceding claims, further comprising a power distribution system,
wherein the management agent (201) is configured to control power states including hibernation mode; and
wherein the management agent (201) is configured to operate independently of the at least one central processing unit assembly (203) and the at least one graphics processing unit assembly (204) during low-power hibernation.

13. The switched fabric backplane system (200) according to any of the preceding claims, further comprising:
a housing configured for use in a land, sea, or air vehicle;
a VPX-compliant power supply module within the housing; and
a VPX-compliant cooling system within the housing.

14. The switched fabric backplane system (200) according to claim 13,
wherein the VPX-compliant power supply module is configured to receive vehicle power and convert the received vehicle power to datacenter-class power, and
wherein the vehicle power is 28VDC or 115V three-phase 400Hz AC and the datacenter-class power is between 3.3VDC and 54VDC.

15. The switched fabric backplane system according to claim 13 or 14,
wherein the VPX-compliant cooling system is selected from the group consisting of: a convection cooling system, a direct-to-chip single-phase liquid cooling system, a direct-to-chip two-phase liquid cooling system, a single-phase immersion cooling system, and a two-phase immersion cooling system.
